# EUROPEAN PATENT SPECIFICATION

(11) **EP 2 218 367 B1**
(45) Date of publication and mention of the grant of the patent: **04.06.2014**
(21) Application number: 09174165.2
(22) Date of filing: 27.10.2009
(51) Int. Cl.: A47J 31/36

(54) **Perforation device for capsules and machine for preparing beverages incorporating said device**
Kapselperforationsvorrichtung und Getränkemaschine mit dieser Vorrichtung
Dispositif de pérforation pour capsules, et machine à boisson avec ledit dispositif

(30) Priority: 03.11.2008 IT TV20080139
(43) Date of publication of application: 18.08.2010
(73) Proprietor: Hausbrandt Trieste 1892 SPA, 31040 Nervesa della Battaglia (TV) (IT)
(72) Inventor: Zanetti, Martino, 31020, Villlorba (TV) (IT)
(74) Representative: Dragotti, Gianfranco

(56) References cited:
- US-A- 4 990 352
- US-A1- 2003 071 056

## Description

The present invention relates to machines for preparing beverages which use hermetically sealed capsules containing powder material, for example coffee.

Below reference will be made, for the sake of convenience of the description, to the preparation of a coffee infusion, in particular espresso coffee, although this must not be understood as having a limiting meaning.

In particular, the present invention refers to a machine which uses a capsule of the type described for example in the European patent 1,608,569 in the name of the same Applicant (to which specific reference is made herein). This capsule comprises a moulded-plastic casing which is sealed at the top by a perforatable top foil, being divided into a top chamber, delimited by the aforementioned top foil and by a bottom wall, said chamber being intended to contain a quantity of coffee powder, and a bottom chamber or infusion chamber, delimited at the top by said bottom wall and at the bottom by a perforatable sealing foil (bottom foil). Communication between the two chambers is ensured by holes formed in the aforementioned wall.

A machine of this kind, which is described in the European patent 1,796,517 (also in the name of the same Applicant, to which specific reference is also made herein), envisages an infusion station or area where the capsule undergoes in sequence perforation of the aforementioned bottom foil and perforation of the top foil.

The machine comprises a perforation device in the form of an L-shaped lever with its fulcrum at the top end and with a punch at the other end. This lever has a rest position, which does not interfere with the capsule, and a working position, which can be reached with the aid of an actuating solenoid and where the punch penetrates from below upwards into the capsule with the result that the bottom foil is perforated so as to create there an opening or spout for discharging the coffee infusion which forms inside the infusion chamber.

The top foil is then perforated and pressurized hot water is introduced so as to permeate the first coffee powder, passing into the bottom chamber of the capsule (i.e. that defined between the bottom wall and the bottom foil), the form of the chamber resulting in the formation of the emulsified infusion of coffee and air, which is characteristic of espresso coffee. The coffee is dispensed through the spout directly into an underlying receiving receptacle without wetting the lever (which is moved back into the rest position by a recall spring) or other parts of the machine, thus avoiding problems of a mechanical or hygienic/sanitary nature associated with conventional machines for preparing espresso coffee.

The undoubted advantage achieved with this machine and the associated capsule is offset by the industrial problem consisting in the fact that this machine, which has a relatively complex design, may be subject to malfunctions, in particular of the actuating solenoid and the mechanism for recalling the lever-shaped perforation device.

Another machine of this type is described in US-A-4 990 352.

The main object of the present invention is to provide a low-cost device with a simple design for perforating the bottom foil of a capsule filled with coffee powder.

Another object is to provide a machine for preparing and dispensing beverages, comprising this perforation device.

These and other objects are achieved by a perforation device and a machine as defined in Claim 1.

In brief, according to the invention, a capsule is inserted into the machine in the vertical position, this meaning that the capsule is positioned so that the respectively top and bottom foils are arranged horizontally and are engaged by first perforating means, as regards the bottom foil, and by second means for performing perforation and supply pressurized hot water, as regards the top foil. The introduction of the capsules is performed by means of a flap which is also vertical and provided with pushing means on its side.

When the flap is closed, the pushing means displaces the capsule towards the aforementioned infusion station or area where the edge of the bottom of the capsule rests on a collar. During this displacement, which is linear, the capsule passes over a device for perforating the bottom sealing foil, actuating it directly without the aid of any operating means. The aforementioned means for perforating the top sealing foil and introducing pressurized hot water into the capsule operate inside the infusion area. In this case also, as in the already mentioned European patent 1,796,517, the perforation device creates in the bottom foil a spout for directly dispensing the beverage into the receiving receptacle situated underneath the collar on which the capsule rests.

In a preferred embodiment of the invention the perforation device is a star-shaped element with arms terminating in cutting tips and centrally pivoted on a freely rotating horizontal-axis pin.

It is precisely the linear displacement of the capsule which causes the penetration of a tip into the bottom sealing foil and creates the spout, before the capsule reaches the infusion area where there is no physical interference between the beverage dispensing means and the perforation device.

The characteristic features of the present invention and the consequent advantages are explained more clearly in the following description, provided solely by way of example, with reference to the accompanying drawings in which:
- Fig. 1 shows a perspective view of the operating assembly of a machine for preparing beverages according to the invention in the rest condition;
- Fig. 2 is a view, similar to that of Fig. 1, showing the operating assembly during operation;
- Fig. 3 is a perspective view of a perforation device according to the invention;
- Fig. 4 is a partial top plan view of the operating assembly inside which said perforation device according to the invention operates;
- Fig. 5 is a cross-section along the line V-V of Fig. 1;
- Fig. 6 is a partial cross-section along the line VI-VI of Fig. 5 where the capsule perforation device is shown in the rest condition, namely immediately before starting operation;
- Fig. 7 is a view, similar to that of Fig. 6, in which the capsule perforation device is shown during operation.

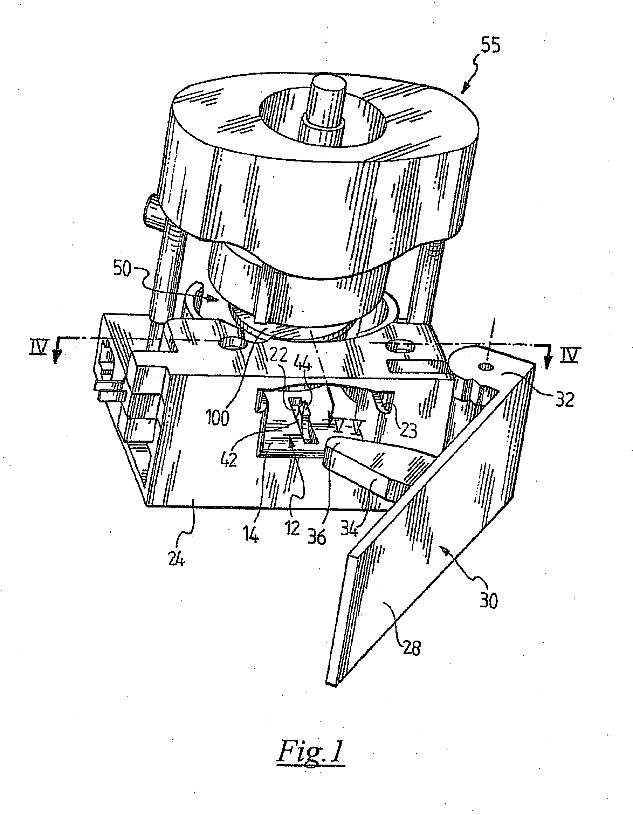

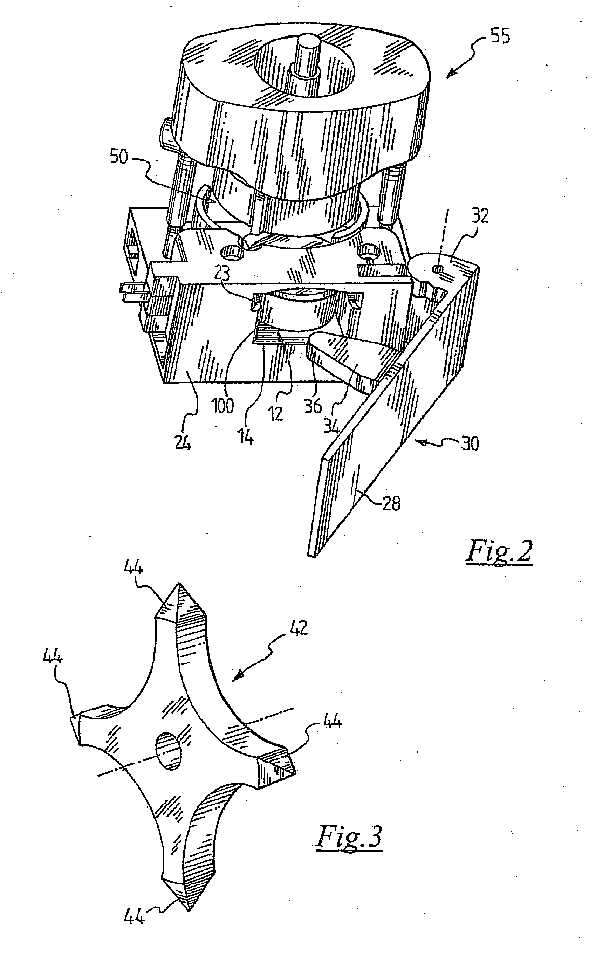

Fig. 1 shows the main operating unit, i.e. the subassembly of a machine for preparing coffee and other beverages which uses capsules which are filled with a quantity of powder material and are preferably of the type described in the already mentioned European patent 1,608,569. As explained in greater detail below with reference to Fig. 2, the capsule denoted by the reference number 100 is used in the machine in the already defined vertical position. The operating unit comprises a zone 10 for loading a capsule 100, a perforation device 40 (discussed in greater detail below), an infusion zone 50 co-operating with an infusion unit 55 and a chute 56 for discharging the capsule after use.

The loading zone 10 of the machine comprises a substantially parallelepiped compartment 12 defined by the following:
- a first and a second vertical opening 14 and 16 which respectively connect the loading zone 10 to the exterior of the machine and the infusion zone 50;
- a slightly curved part 17 of an upper wall 18;
- two vertical side walls 21 which are spaced from each other by slightly more than the outer diameter of a capsule 100 and have a shoulder 23 with a height slightly greater than the distance between the bottom edge and the top edge of the capsule;
- a horizontal bottom wall 20 which has a slit 22 which extends centrally between the two open vertical sides 14 and 16.

The first opening 14 is provided in a wall 24 which forms the front of the operating unit. A flap 30, which is provided with a handle 28 and the hinge 32 of which is supported by the front wall 24, has the function of closing the opening 14. According to an important characteristic feature of the present invention, a pushing element 34, in the form of a projecting lug with a free and tapered end 36, is rigidly fixed to the inner side of the flap 30 - see Fig. 1. For greater clarity the flap 30 is shown only in the overall view of Figures 1 and 2.

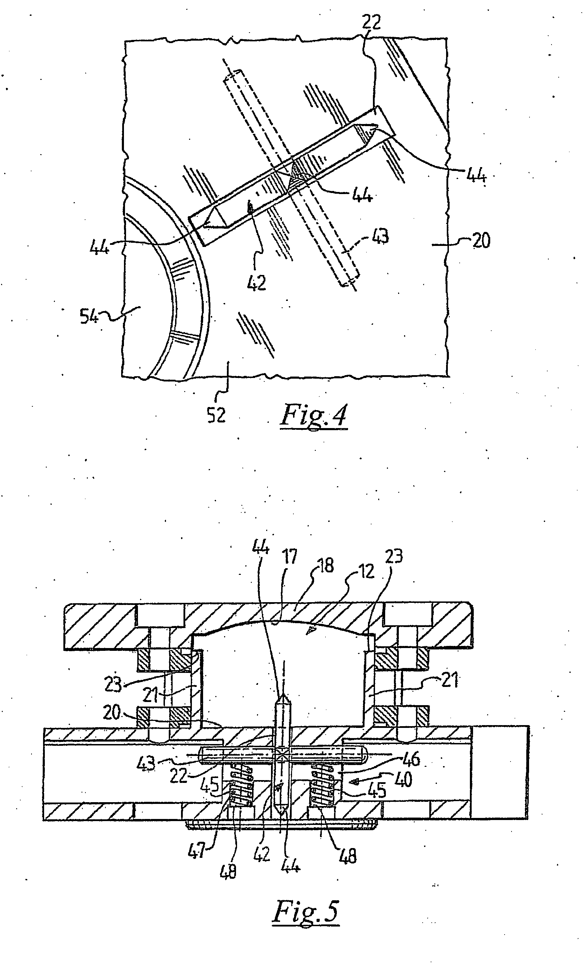

The perforation device 40 comprises a star-shaped element 42 with angularly spaced cutting tips 44: in this embodiment the tips are four in number and spaced at 90° from each other - see Fig. 3 - but could also be three or more than four, depending on the dimensional parameters of the machine and the capsule. In the remainder of this description each tip is indicated by the letter A to D appended to the reference number 44 so as to indicate their sequential order. The star-shaped element 42 is mounted idle on a horizontal-axis pin 43 which is subject the action of a pair of springs 45, the function of which is explained below. The ends of the pin 43 project through respective eyelets 46 formed in a pair of vertical walls 47 and the bottom ends of the springs 45 are housed inside respective seats 48 provided in a horizontal base 49 parallel to the horizontal bottom wall 20 which defines the compartment 12. The springs 45 keep the star-shaped element 42 pushed upwards so as to cause one or two of the cutting tips 44 to project inside the compartment 12, through the slit 22 of the horizontal bottom base 20, while allowing the element 42 to move downwards - see Figs. 4 and 5.

The main function of the springs 45 is to allow the tips of the star-shaped perforator to be pushed downwards, exerting a suitable pressure when the capsule path must be freed, for example when there is a defective capsule or a capsule not suitable for the particular infusion assembly.

The function of the springs is therefore that of allowing emergency action to be taken.

The infusion zone 50 comprises a base 52 which is substantially the continuation of the horizontal bottom wall 20 of the compartment 12, but has an opening 54 and also comprises an infusion unit 55 incorporating both the device for perforation of the top foil of the capsule and the means for introducing pressurized hot water. Means for keeping the capsule stationary during infusion and for releasing it after use are also present in the infusion zone.

In this condition the arrival in the infusion zone of a new capsule, pushed by the pushing element 34, causes the displacement of the capsule present in the same infusion zone towards a discharge chute 60 which is situated in the rear part of the machine. These parts of the machine are not described here in detail both because they do not form part of the present invention, as defined in the following claims, and because they are described in European patent 1,796,517 in the name of the same Applicant to which (as mentioned further above) specific reference is made here.

If we now consider operation of the machine, reference is made to the example of a capsule of the type forming the subject of the already mentioned European patent 1,608,569. The sole operation required of the user is to load a capsule 100 inside the compartment 12 through the opening 14, so that the top edge 102 of the capsule rests on the shoulder 23 of the vertical side walls 21, following which the flap 30 is closed using the handle 28. This condition is shown in Fig. 2.

Obviously, the user must also previously position a receptacle for receiving the beverage, typically a cup (not shown), below the opening 54 provided on the base 52 of the infusion zone 50.

As a result of the closing action of the flap 30, the pushing element 34 by means of the free end 36 displaces the capsule 100 towards the infusion zone 50 in a horizontal direction perpendicular to the axis of the pin 43 of the star-shaped element 42.

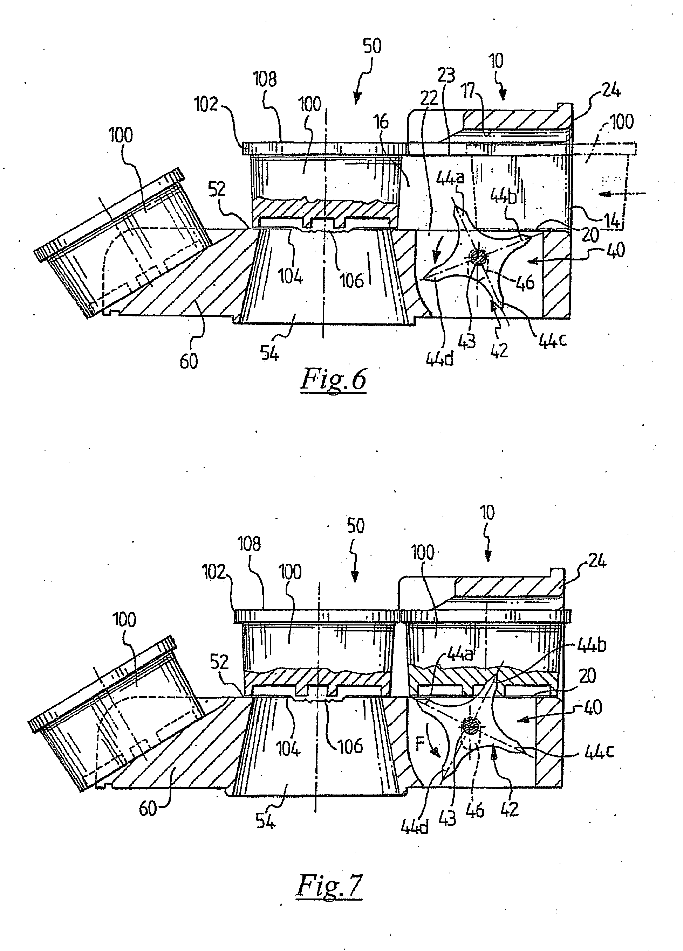

It must remembered that, in the rest condition (as shown in Fig. 6), as a result of the upwards pushing force exerted by the springs 45, at least one cutting tip 44A of the star-shaped element 42 of the perforation device 40 projects through the slit 22 from the horizontal bottom wall 20 of the loading compartment 12. At the start of the movement involving displacement of the capsule 100, caused by closure of the flap 30, the side surface 110 of the capsule 100 strikes against the tip 44A (first tip) projecting into the compartment 12 from the bottom wall 20, with the result that the star-shaped element 42 rotates about the pin 43 in the anti-clockwise direction, as indicated by the arrow F in Fig. 6, until the first tip 44A is positioned flush with the surface of the bottom wall 20. In the meantime, the following tip 44B (second tip) has moved from the bottom up to the level of the slit 22, engaging with the bottom of the capsule.

The size of the star-shaped element 42 (understood as meaning the length of the arms terminating in the cutting tips 44) is such that, when the front edge of the capsule pushes forwards the arm 44A of the star, the central part of the bottom of the capsule is situated above the second tip 44B.

In this condition, the combined effect of the thrust exerted by the front edge of the capsule on the arm 44A of the star and the upwards thrust of the springs 44 prevails such that the star-shaped element 42 continues its rotation in the direction of the arrow F, with the result that the bottom foil 104 of the capsule 100 is perforated by the tip 44B which creates a spout 106 at the perforation point. In the meantime, the following tip 44C (third tip) has moved from the bottom up to the level of the slit 22, but without projecting owing to the presence of the capsule bottom.

The final part of the movement of the capsule 100 results in the capsule being housed inside the infusion area 50.

Continuously together with formation of the spout 106, the movement produced by the pushing element 34 brings the capsule 100 into the infusion area 50, i.e. into alignment with the infusion unit 55 and with the opening 54, underneath which the receptacle for receiving the beverage has been positioned. Consequently, following perforation of the top foil 108 and the introduction of pressurized hot water inside the capsule 100, the beverage is produced and instantaneously dispensed through the spout 106, without touching any part of the machine.

The above description also confirms that the invention likewise achieves the other objects previously mentioned, in particular the constructional and functional simplicity of the perforation device which no longer requires any active operating system, but operates solely as a result of the translation of the new capsule introduced into the loading compartment.

This results in a significant increase in the reliability of the entire machine.

Finally it is understood that, within the scope of the following claims, the present invention may have different embodiments.

For example, in place of the single-piece star-shaped perforator shown in Fig. 3, it is possible to envisage that the perforation tips are mounted on a chain in turn meshing with one or more pinions, in order to perform the same functions.

Likewise it is possible to envisage that the pushing means 34, instead of taking the form of a pushing element projecting from the closing flap of the capsule loading compartment, may be formed differently, separate from this flap, while still performing the function of causing translation of the capsule loaded into the compartment 12 as far as the infusion zone so as to actuate the perforation device.

## Claims

1. Device for perforating the bottom sealing foil (104) of a capsule (100) filled with powder material for preparing a beverage, so as to form a spout (106) for dispensing the beverage into an underlying receiving receptacle, said device being associated with a machine for preparing beverages comprising a zone (12) for loading capsules (100) and an infusion zone (50), the perforation device comprising at least one perforating tip (44) movable between a rest position where it is situated at a distance underneath said capsule and an operating position where it penetrates into said foil in a central position, **characterized by** means for movement of said at least one tip between said two positions at the same time as translation of said capsule along a horizontal path perpendicular to said movement of said at least one tip from said rest position into said operating position, said translation of said capsule being caused by pushing means (30) acting on said capsule (100) when it is introduced into said loading zone.

2. Perforation device according to Claim 1, **characterized in that** said pushing means consist of an element (34) projecting from a flap (30) designed to allow access to the said loading zone and dose said zone so that said pushing element (34) engages with the rear side surface of the capsule, forcing it to perform said translation.

3. Perforation device according to Claim 1, **characterized in that** said means for moving said at least one tip consist in means for rotation of said at least one tip (44) from said rest position into said operating position and the subsequent return movement into said rest position.

4. Perforation device according to Claim 3, **characterized in that** said means for moving said at least one tip consist of a star-shaped rotating element (42) comprising a plurality of cutting tips (44) projecting axially from a central body and spaced angularly and means (45) able to bias resiliently said central body towards the position where at least one of said tips projects into the movement path of said capsule in said loading zone.

5. Perforation device according to Claim 4, **characterized in that** said star-shaped rotating element is mounted idle on a horizontal-axis pin (43) having ends projecting through eyelets (46) formed in a pair of vertical support walls (47) situated underneath said capsule loading zone and said means (45) consist of a pair of springs which bias said pin (43) upwards along said eyelets (46) so that at least one tip (44) projects into a compartment (12) forming said loading zone through a slit (22) formed in a horizontal bottom wall (20) of said compartment.

6. Machine for preparing beverages using capsules (100) filled with powder material, of the type comprising a zone for loading the capsules individually and an infusion zone into which second perforation means penetrate, perforating the top foil of the capsule, and supply hot water under pressure inside the capsule forming the beverage which is discharged through an opening formed by means of perforation in the bottom foil delimiting the capsule, in which the perforation of said bottom closing foil of the capsule is also performed in said loading zone, **characterized in that** it comprises in the region of said loading zone a perforation device according to each one of Claims 1 to 5.

7. Machine according to Claim 6, **characterized in that** said pushing means consist of the flap for accessing the capsule loading zone, said flap being provided internally with a projecting element tapered towards the free end, the latter being designed to act on and push the capsule which has just been introduced so as to perform translation from said loading zone into said infusion zone.

## Patentansprüche

1. Vorrichtung zum Perforieren der Bodendichtfolie (104) einer Kapsel (100), die mit einem Pulvermaterial zum Vorbereiten eines Getränks gefüllt ist, um so eine Tülle (106) zum Abgeben des Getränks in ein darunterliegendes Aufnahmegefäß zu bilden, wobei die Vorrichtung mit einer Maschine zum Vorbereiten von Getränken verknüpft ist, die eine Zone (12) zum Laden von Kapseln (100) und eine Infusionszone (50) aufweist, wobei die Perforationsvorrichtung zumindest eine Perforierspitze (44) aufweist, die zwischen einer Ruheposition, an der sie sich in einem Abstand unterhalb der Kapsel befindet, und einer Arbeitsposition bewegbar ist, an der sie die Folie an einer mittleren Position durchdringt, **gekennzeichnet durch** eine Einrichtung zum Bewegen der zumindest einen Spitze zwischen den beiden Positionen gleichzeitig mit einer Translation der Kapsel entlang eines horizontalen Pfads, der senkrecht zu der Bewegung der zumindest einen Spitze von der Ruheposition zu der Arbeitsposition ist, wobei die Translation der Kapsel **durch** eine Druckeinrichtung (30) veranlasst wird, die auf die Kapsel (100) einwirkt, wenn diese in die Ladezone eingeführt ist.

2. Perforationsvorrichtung gemäß Anspruch 1, **dadurch gekennzeichnet, dass** die Druckeinrichtung aus einem Element (34) besteht, das von einer Klappe (30) vorsteht, die so ausgelegt ist, dass sie einen Zugang zu der Ladezone erlaubt und die Zone schließt, so dass das Druckelement (34) mit der hinteren Seitenfläche der Kapsel in Eingriff gelangt, wodurch diese zum Durchführen der Translation gezwungen wird.

3. Perforationsvorrichtung gemäß Anspruch 1, **dadurch gekennzeichnet, dass** die Einrichtung zum Bewegen der zumindest einen Spitze aus einer Einrichtung für eine Drehung der zumindest einen Spitze (44) von der Ruheposition zu der Arbeitsposition und für die nachfolgende Rückkehrbewegung zu der Ruheposition besteht.

4. Perforationsvorrichtung gemäß Anspruch 3, **dadurch gekennzeichnet, dass** die Einrichtung zum Bewegen der zumindest einen Spitze aus einem sternförmigen Drehelement (42), das viele Schneidspitzen (44) aufweist, die von einem mittleren Körper axial vorstehen und über einen Winkel voneinander beabstandet sind, und einer Einrichtung (45) besteht, die dazu in der Lage ist, den mittleren Körper zu jener Position federnd vorzuspannen, an der zumindest eine der Spitzen in den Bewegungspfad der Kapsel in der Ladezone vorsteht.

5. Perforationsvorrichtung gemäß Anspruch 4, **dadurch gekennzeichnet, dass** das sternförmige Drehelement freilaufend an einem horizontalen Achsstift (43) angebracht ist, der Enden hat, die durch Ösen (46) hindurch vorstehen, die in einem Paar von vertikalen Stützwänden (47) ausgebildet sind, die sich unter der Kapselladezone befinden, und wobei die Einrichtung (45) aus einem Paar Federn besteht, die den Stift (43) entlang des Ösen (46) nach oben vorspannen, so dass zumindest eine Spitze (44) in ein Fach (12) vorsteht, das die Ladezone bildet, und zwar durch einen Schlitz (22), der in einer horizontalen Bodenwand (20) des Fachs ausgebildet ist.

6. Maschine zum Vorbereiten von Getränken unter Verwendung von Kapseln (100), die mit einem Pulvermaterial gefüllt sind, und zwar von jener Art, die eine Zone zum individuellen Laden der Kapseln und eine Infusionszone aufweist, die eine zweite Perforationseinrichtung durchdringt, wobei die obere Folie der Kapsel perforiert wird, und wobei heißes Wasser unter Druck in das Innere der Kapsel zugeführt wird, wodurch das Getränk gebildet wird, das durch eine Öffnung ausgelassen wird, die mittels der Perforierung in der Bodenfolie gebildet wird, die die Kapsel abgrenzt, wobei die Perforierung der Bodenschließfolie der Kapsel auch in der Ladezone durchgeführt wird, **dadurch gekennzeichnet, dass** sie in dem Bereich der Ladezone eine Perforationsvorrichtung gemäß einem der Ansprüche 1 bis 5 aufweist.

7. Maschine gemäß Anspruch 6, **dadurch gekennzeichnet, dass** die Druckeinrichtung aus der Klappe für den Zugang der Kapsel zu der Ladezone besteht, wobei die Klappe intern mit einem vorstehenden Element versehen ist, das zu dem freien Ende hin abgeschrägt ist, wobei das letztere so ausgelegt ist, dass sie auf die Kapsel wirkt und diese drückt, die gerade eingeführt wurde, um so die Translation von der Ladezone in die Infusionszone durchzuführen.

## Revendications

1. Dispositif de perforation de l'opercule de scellage inférieur (104) d'une capsule (100) remplie d'une matière en poudre destinée à la préparation d'une boisson, de sorte à former un bec verseur (106) destiné à distribuer la boisson dans un réceptacle de réception sous-jacent, ledit dispositif étant associé à une machine de préparation de boissons comprenant une zone (12) de chargement de capsules (100) et une zone d'infusion (50), le dispositif de perforation comprenant au moins une pointe de perforation (44) mobile entre une position inactive où elle se trouve à une certaine distance en dessous de ladite capsule et une position opérationnelle où elle pénètre dans ledit opercule dans une position centrale, **caractérisé par** des moyens de déplacement de ladite au moins une pointe entre lesdites deux positions en même temps que la translation de ladite capsule le long d'une trajectoire horizontale perpendiculaire audit déplacement de ladite au moins une pointe de ladite position inactive à ladite position opérationnelle, ladite translation de ladite capsule étant causée par des moyens de poussée (30) agissant sur ladite capsule (100) lorsqu'elle est introduite dans ladite zone de chargement.

2. Dispositif de perforation selon la revendication 1, **caractérisé en ce que** lesdits moyens de poussée sont constitués d'un élément (34) faisant saillie d'un volet (30) conçu pour permettre l'accès à ladite zone de chargement et fermer ladite zone de sorte que ledit élément de poussée (34) se met en prise avec la surface arrière de la capsule, la forçant à effectuer ladite translation.

3. Dispositif de perforation selon la revendication 1, **caractérisé en ce que** lesdits moyens de déplacement de ladite au moins une pointe sont constitués de moyens pour assurer la rotation de ladite au moins une pointe (44) de ladite position inactive à ladite position opérationnelle et son retour consécutif dans ladite position inactive.

4. Dispositif de perforation selon la revendication 3, **caractérisé en ce que** lesdits moyens de déplacement de ladite au moins une pointe sont constitués d'un élément de rotation en forme d'étoile (42) comprenant une pluralité de pointes de découpe (44) faisant saillie axialement d'un corps central et espacées angulairement et des moyens (45) aptes à amener de manière élastique ledit corps central vers la position où au moins l'une desdites pointes fait saillie dans la trajectoire de déplacement de ladite capsule dans ladite zone de chargement.

5. Dispositif de perforation selon la revendication 4, **caractérisé en ce que** ledit élément de rotation en forme d'étoile est monté dans l'état inactif sur une tige d'axe horizontal (43) ayant des extrémités faisant saillie à travers des oeillets (46) formés dans une paire de parois de support verticales (47) situées en dessous de ladite zone de chargement de capsules et lesdits moyens (45) sont constitués d'une paire de ressorts qui amènent ladite tige (43) vers le haut le long desdits oeillets (46) de sorte qu'au moins une pointe (44) fait saillie dans un compartiment (12) formant ladite zone de chargement à travers une fente (22) formée dans une paroi de fond horizontale (20) dudit compartiment.

6. Machine de préparation de boissons utilisant des capsules (100) remplies d'une matière en poudre, du type comprenant une zone pour charger les capsules individuellement et une zone d'infusion dans laquelle des seconds moyens de perforation pénètrent, perforant l'opercule supérieur de la capsule, et fournissent de l'eau chaude sous pression à l'intérieur de la capsule, formant la boisson qui est évacuée à travers une ouverture formée par les moyens de perforation dans l'opercule inférieur délimitant la capsule, dans laquelle la perforation dudit opercule de fermeture inférieur de la capsule est également effectuée dans ladite zone de chargement, **caractérisée en ce qu'**elle comprend dans la région de ladite zone de chargement un dispositif de perforation selon chacune des revendications 1 à 5.

7. Machine selon la revendication 6, **caractérisée en ce que** lesdits moyens de poussée sont constitués d'un volet pour accéder à la zone de chargement de capsules, ledit volet étant doté à l'intérieur d'un élément en saillie effilé vers l'extrémité libre, ce dernier étant conçu pour agir sur la capsule qui vient d'être introduite et la pousser de sorte à effectuer une translation de ladite zone de chargement dans ladite zone d'infusion.
